# EUROPÄISCHE PATENTANMELDUNG

(11) **EP 3 748 396 A1**
(43) Veröffentlichungstag der Anmeldung: **09.12.2020**
(21) Anmeldenummer: 20169686.1
(22) Anmeldetag: 15.04.2020
(51) Int. Cl.: G01S 7/497, G01S 13/93, G01S 7/40, G01S 13/931, G01S 17/931, G01S 7/52, G01S 15/931, G01S 7/48, G01S 17/42, G06T 7/80, G01M 17/007, G01M 11/06, G01B 11/27

(54) **JUSTIEREINHEIT ZUR AUSRICHTUNG VON FAHRZEUGSENSOREN UND -KAMERAS AN EINEM KRAFTFAHRZEUG**

(30) Priorität: 06.06.2019 DE 102019115372
(71) Anmelder: TKR Spezialwerkzeuge GmbH, 58285 Gevelsberg (DE)
(72) Erfinder: Kreischer, Torsten, 58300 Wetter (DE)
(74) Vertreter: Kalkoff & Partner Patentanwälte PartmbB

(57) **Zusammenfassung**

Die Erfindung betrifft eine Justiereinheit (1) zur Ausrichtung von Fahrzeugsensoren und/oder - kameras an einem Kraftfahrzeug. Um eine Justiereinheit zur Ausrichtung von Fahrzeugsensoren und/oder Kameras an einem Kraftfahrzeug bereitzustellen, welche eine komfortable und zuverlässige Einstellung der Fahrzeugsensoren und/oder Kameras erlaubt, ist vorgesehen, dass die Justiereinheit mit einem Grundträger (2) zur verstellbaren Aufnahme eines Ausrichtelements (3), einer mit dem Grundträger verbundenen Verfahreinheit (4), einer mit der Verfahreinheit verbundenen Positionserfassungseinheit zur Positionsbestimmung des Ausrichtelements gegenüber den Fahrzeugsensoren und/oder -kameras und einer zentralen Steuereinheit zur selbsttätigen Steuerung und Ausrichtung der Verfahreinheit und des Ausrichtelements gegenüber dem Kraftfahrzeug gebildet ist.

## Beschreibung

Die Erfindung betrifft eine Justiereinheit zur Ausrichtung von Fahrzeugsensoren und/oder - kameras an einem Kraftfahrzeug.

Moderne Kraftfahrzeuge weisen eine Vielzahl von Fahrzeugsensoren und/oder -kameras auf, welche zum Betrieb von unterschiedlichen Assistenzsystemen verwendet werden, die im Betrieb des Kraftfahrzeugs den Fahrer in bestimmten Fahrsituationen unterstützen. Mögliche Funktionalitäten der Assistenzsysteme sind bspw. ein Spurhalteassistent, ein Abstandsregeltempomat, ein Spurwechselassistent und Notbremsassistent. Assistenzsysteme nutzen dabei unterschiedliche Sensoren, wie bspw. Ultraschallsensoren oder Radar, Lidar oder Kameras, um die nötigen Umgebungsinformationen zu ermitteln, sodass auch Unfälle vermieden oder deren Folgen zumindest abgeschwächt werden können.

Voraussetzung für die einwandfreie Funktion der auf die Sensoren und Kameras angewiesenen Systeme ist dessen exakte Ausrichtung zur Fahrachse. Nach einem notwendigen Austausch der Sensoren und/oder Kameras, bspw. im Rahmen einer Unfallinstandsetzung, ist zur Gewährleistung der Funktion der Assistenzsysteme eine Justierung der Kameras und/oder Sensoren von essentieller Bedeutung. Eine Ausrichtung erfolgt dabei derzeit üblicherweise unter Zuhilfenahme von sogenannten Kalibriertafeln, welche exakt gegenüber dem Kraftfahrzeug ausgerichtet werden müssen. Wesentlich für eine exakte Ausrichtung des Fahrzeugs ist dabei eine exakte Positionierung des Fahrzeugs gegenüber den Kalibriertafeln, wobei hierzu an dem Fahrzeug Positionsgeber zu positionieren sind.

Der im Werkstattbetrieb durchzuführende Justiervorgang erfordert daher einen hohen Aufwand und ist mit großer Sorgfalt durchzuführen, um eine exakte Ausrichtung der der Funktion der Assistenzsysteme dienenden Sensoren und/oder Kameras zu gewährleisten. Hiervon ausgehend liegt der Erfindung die Aufgabe zugrunde, eine Justiereinheit zur Ausrichtung von Fahrzeugsensoren und/oder Kameras an einem Kraftfahrzeug bereitzustellen, welche eine komfortable und zuverlässige Einstellung der Fahrzeugsensoren und/oder Kameras erlaubt.

Die Erfindung löst die Aufgabe durch eine Justiereinheit mit den Merkmalen des Anspruchs 1. Vorteilhafte Weiterbildungen der Erfindung sind in den abhängigen Ansprüchen angegeben.

Die erfindungsgemäße Justiereinheit zur Ausrichtung von Fahrzeugsensoren und/oder Kameras an einem Kraftfahrzeug weist
- einen Grundträger zur verstellbaren Aufnahme eines Ausrichtelements,
- eine mit dem Grundträger verbundene Verfahreinheit,
- eine mit der Verfahreinheit verbundene Positionserfassungseinheit zur Positionsbestimmung des Ausrichtelements gegenüber den Fahrzeugsensoren und -kameras und
- eine zentrale Steuereinheit zur selbsttätigen Steuerung und Ausrichtung der Verfahreinheit und des Ausrichtelements gegenüber dem Kraftfahrzeug
   auf.

Der Grundträger der erfindungsgemäßen Justiereinheit dient zur ortsfesten Aufnahme eines Ausrichtelements, bspw. einer Kalibriertafel mittels der die Ausrichtung des Fahrzeugsensors und/oder -kamera gegenüber der Fahrachse einstellbar und überprüfbar ist. Der Grundträger ist dabei zur verstellbaren Aufnahme des Ausrichtelements ausgebildet, sodass diese nach einer Positionierung der Justiereinheit ggf. über eine Verstellung gegenüber dem Grundträger in seiner Position exakt eingestellt werden kann. Der Grundträger ist dabei zur lösbaren Aufnahme des Ausrichtelements ausgebildet, um so für unterschiedliche Fahrzeugtypen die jeweils erforderlichen Ausrichtelemente verwenden zu können.

Eine Positionierung der Ausrichtelemente gegenüber dem auszurichtenden Fahrzeugsensor und/oder -kamera erfolgt dabei über eine mit dem Grundträger verbundene Verfahreinheit, die es ermöglicht, den Grundträger gegenüber dem Fahrzeug frei im Raum zu positionieren. Bei der Verfahreinheit kann es sich bspw. um ein Fahrwerk mit einem elektromotorischen mit Rollen verbundenen Antrieb handeln, welcher in einfacher Weise eine freie Positionierbarkeit der Justiereinheit im Raum, insbesondere in der Werkstatt gegenüber dem Fahrzeug ermöglicht.

Zur Positionierung der Positioniereinheit gegenüber dem Fahrzeug ist erfindungsgemäß eine mit der Verfahreinheit verbundene Positionserfassungseinheit vorgesehen, welche hierfür dazu ausgebildet ist, die Position der Justiereinheit gegenüber dem Kraftfahrzeug zuverlässig zu erfassen. Die Positionserfassungseinheit weist bspw. ein LIDAR-System, Beschleunigungssensoren, Magnetfeldsensoren, Neigungssensoren und/oder 3D-Kameras auf, die es erlauben, das Fahrzeug so zu erfassen, dass auch ohne Positionsgeber am Kraftfahrzeug eine exakte Positionsbestimmung des Ausrichtelements gegenüber den Fahrzeugsensoren und/oder -kameras erfolgen kann. Über eine Positionierung der Justiereinheit durch die Verfahreinheit und eine ggf. erfolgende Ausrichtung des Ausrichtelements gegenüber dem Grundträger erfolgt eine exakte Positionierung des Ausrichtelements gegenüber dem Fahrzeug. Die Positionierung des Ausrichtelements erfolgt dabei über eine zentrale Steuereinheit, die zur selbsttätigen Steuerung und Ausrichtung der Verfahreinheit und des Ausrichtelements gegenüber dem Kraftfahrzeug ausgebildet ist.

Durch die Steuereinheit erfolgt nach einer Festlegung der durchzuführenden Justiertätigkeiten eine automatische Positionierung der Justiereinheit gegenüber dem Kraftfahrzeug, wobei hierzu in der Steuereinheit oder in einer mit der Steuereinheit verbundenen Datenbank die jeweiligen fahrzeugspezifischen Positionsdaten hinterlegt sind. Die selbsttätige Ausrichtung der Justiereinheit, wobei die Steuereinheit hierzu über die Verfahreinheit eine entsprechende Positionierung bewirkt, erlaubt es vollständig auf eine nutzerseitige Ausrichtung des Ausrichtelements zu verzichten. Die Positionserfassungseinheit gewährleistet dabei eine exakte Ausrichtung des Ausrichtelements gegenüber dem Fahrzeug, wobei nach Festlegung des Fahrzeugtyps und des/der zu überprüfenden bzw. auszurichtenden Fahrzeugsensors bzw. Kameras die Justiereinheit selbsttätig in die hierfür erforderliche relative Position gegenüber dem Kraftfahrzeug gelangt.

Die erfindungsgemäße Justiereinheit lässt sich somit universell für verschiedene Fahrzeugtypen und Sensoren und/oder Kameras verwenden, wobei für die jeweiligen Tätigkeiten die Positionierungs- und Ausrichtdaten durch die Steuereinheit abgefragt werden können. Die erfindungsgemäße Justiereinheit erlaubt auch die einfache Ausrichtung von Kameras und Sensoren, wenn hierfür die Anordnung von Ausrichtelementen an mehreren Positionen erforderlich ist. So kann die Justiereinheit über die Verfahreinheit nacheinander die hierfür erforderlichen Positionen anfahren, um eine exakte Ausrichtung zu ermöglichen.

Eine Ausrichtung des Ausrichtelements kann allein über die Verfahreinheit erreicht werden, wobei diese neben einer Verstellung der Justiereinheit im Raum auch die Möglichkeit zu deren Verdrehung bietet, wodurch eine exakte Positionierung erfolgen kann. Nach einer besonders vorteilhaften Ausgestaltung der Erfindung ist jedoch vorgesehen, dass das Ausrichtelement mit einem an dem Grundträger angeordneten und mit der Steuereinheit verbundenen Stellantrieb verbunden ist. Bei dem Stellantrieb handelt es sich um einen beliebig ausgestalteten Verstellmechanismus, über den das Ausrichtelement, bspw. eine Kalibiertafel, mit dem Grundträger verbunden ist. Im Bedarfsfall kann somit nach einer Positionierung der Justiereinheit über die Verfahreinheit über den Stellantrieb eine besonders exakte Ausrichtung des Ausrichtelements erreicht werden.

Eine Bedienung der Justiereinheit kann in beliebiger Weise erfolgen, bspw. über an dieser angeordnete Eingabemittel wie Tastaturen, Touchscreens oder dergleichen. Nach einer besonders vorteilhaften Ausgestaltung der Erfindung ist jedoch vorgesehen, dass die Steuereinheit mit einer Kommunikationseinheit zum drahtlosen Datenaustausch verbunden ist. Die Kommunikationseinheit ermöglicht eine besonders komfortable Bedienung der Justiereinheit, bei der diese bspw. über Bluetooth, WLAN, WIFI oder dergleichen angesteuert werden kann. Zudem bietet die Kommunikationseinheit die Möglichkeit, dass die Steuereinheit bspw. Referenzdaten der einzustellenden Sensoren oder Kameras direkt am Fahrzeug abfragt. Ferner kann die Justiereinheit Fahrzeugdaten aus externen Datenbanken abfragen. Hierdurch wird eine besonders hohe Einstellqualität der Kameras und Sensoren erreicht.

Eine Festlegung der einzustellenden Sensoren sowie des Fahrzeugtyps kann grundsätzlich in beliebiger Weise erfolgen, bspw. manuell, drahtlos oder direkt an der Justiereinheit. Nach einer besonders vorteilhaften Ausgestaltung der Erfindung ist jedoch vorgesehen, dass die Steuereinheit mit einer Scaneinheit zur Vermessung und/oder Identifizierung eines Kraftfahrzeugs verbunden ist. Die Scaneinheit erhöht somit den Automatisierungsgrad der erfindungsgemäßen Justiereinheit in ergänzender Weise. Eine Vermessung kann dabei bspw. auf optischem Wege oder durch Laservermessung erfolgen, durch die auch eine ggf. erforderliche Spurvermessung und/oder Lenkwinkelvermessung in besonders zuverlässiger Weise erfolgen kann. Auch erlaubt die Scaneinheit eine Erfassung der Ausrichtung des Kraftfahrzeugs aufgrund seines Beladungszustandes, sodass über die Steuereinheit eine entsprechende Korrektur der Ausrichtung des Ausrichtelements erfolgen kann.

Nach einer weiteren Ausgestaltung der Erfindung ist ferner vorgesehen, dass die Steuereinheit mit einer Hinderniserfassungseinheit verbunden ist. Eine Hinderniserfassungseinheit gewährleistet im autonomen Betrieb der Justiereinheit, dass diese nicht mit möglicherweise im Verfahrbereich angeordneten Hindernissen kollidieren. Die Hinderniserfassungseinheit kann dabei bspw. auf Basis von Lidarsensoren, Ultraschallsensoren oder Kameras erfolgen.

Zur Ausrichtung der Justiereinheit gegenüber dem Kraftfahrzeug kann die Positionserfassungseinheit mit geeigneten Sensoren bspw. Beschleunigungssensoren, Magnetfeldsensoren, Neigungssensoren versehen sein, die eine exakte Ausrichtung des Ausrichtelements gegenüber dem Kraftfahrzeug ermöglichen. Nach einer weiteren Ausgestaltung der Erfindung ist vorgesehen, dass die Positionserfassungseinheit eine Vorrichtung zur Wegmessung aufweist. Diese basiert bspw. auf optischen Wegsensoren oder Drehgebern und erhöhen die Genauigkeit der Positionierung der Justiereinheit in ergänzender Weise. Die Wegmessung erlaubt dabei eine exakte Kontrolle des zurückgelegten Werts und Richtung.

Nach einer weiteren Ausgestaltung der Erfindung ist ferner vorgesehen, dass die Justiereinheit eine Signaleinheit zum Umgebungsschutz aufweist. Hierbei kann es sich bspw. um Warnleuchten wie bspw. Rundumleuchten handeln, welche im Betrieb der Justiereinheit, insbesondere im Verfahrbetrieb der Umgebung den Verstellvorgang signalisieren.

Ein Ausführungsbeispiel der Erfindung wird nachstehend mit Bezug auf die Zeichnungen erläutert. In den Zeichnungen zeigen:
- Fig. 1: eine schematische Darstellung einer Justiereinheit in einer Seitenansicht und
- Fig. 2: eine schematische Darstellung der Anordnung der Justiereinheit von Fig. 1 gegenüber einem Kraftfahrzeug.

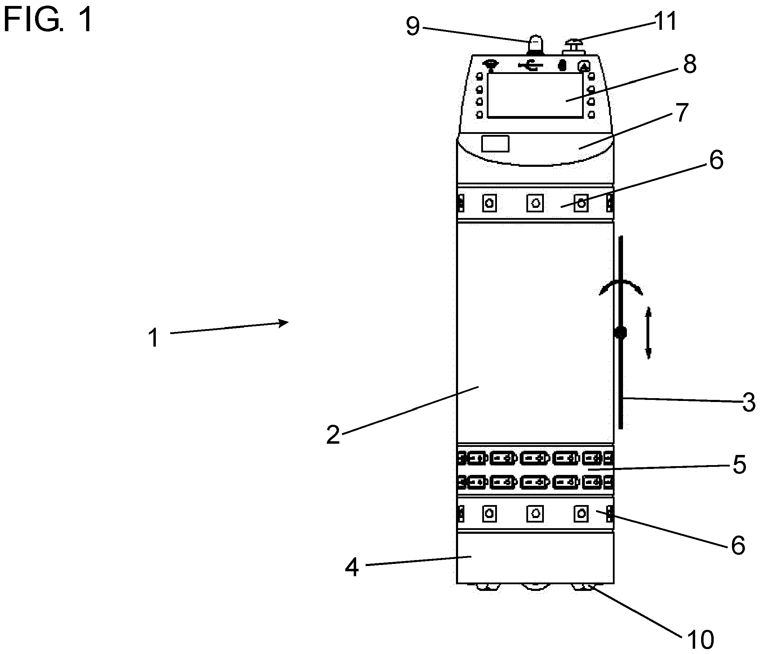

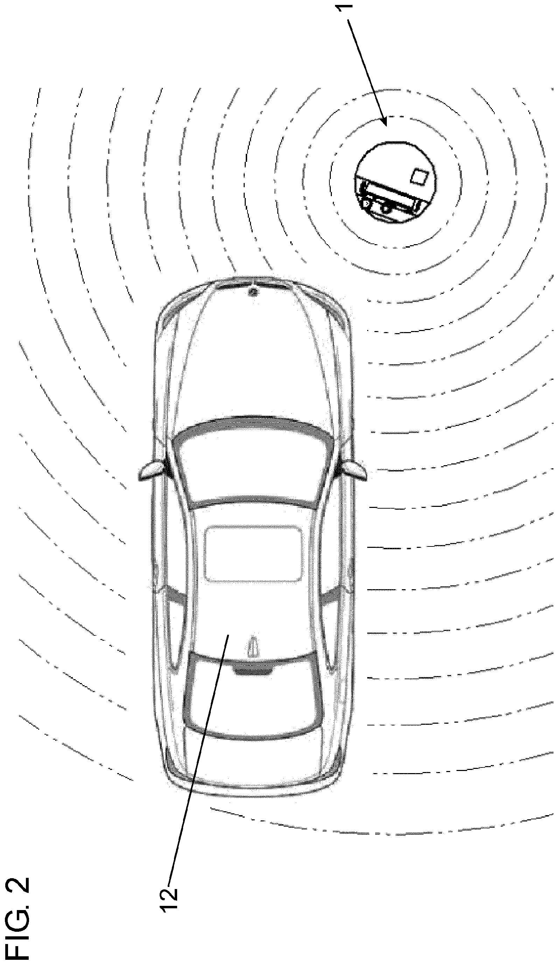

In Fig. 1 ist eine Justiereinheit 1 in einer Seitenansicht dargestellt. Diese weist einen Grundträger 2 auf, an dem ein Ausrichtelement 3 in der Höhe verstellbar sowie neigbar gegenüber dem Grundträger 2 angeordnet ist. Der Grundträger 2 ist mit einer als Fahrwerk 4 ausgebildeten Verfahreinheit verbunden, welche eine selbsttätige Verstellung der Justiereinheit 1 im Raum gegenüber einem Kraftfahrzeug 12 erlaubt (vgl. Fig. 2).

Zur Energieversorgung der Justiereinheit 1 ist ein Akkumodul 5 vorgesehen, welches zur Energieversorgung sämtlicher Einheiten der Justiereinheit 1 dient. Hierbei handelt es sich neben den Sensormodulen 6, welche mit einer hier nicht dargestellten Positionserfassungseinheit verbunden sind, ferner um die hier nicht dargestellte zentrale Steuereinheit, eine hier ebenfalls nicht dargestellte Kommunikationseinheit, mittels derer für den Justiervorgang erforderliche Daten bspw. bei einer externen Datenbank abgefragt werden können auch um die zentrale Steuereinheit zur selbsttätigen Steuerung und Ausrichtung der Verfahreinheit und des Ausrichtelements 3 gegenüber dem Kraftfahrzeug 12. Eine Steuerung der Justiereinheit 1 kann über eine Bedieneinheit 7 erfolgen, welche ein Display 8 aufweist. Ein an der Bedieneinheit 7 angeordnete Signalleuchte 9 dient zur Signalisierung des Betriebs der Justiervorrichtung 1.

Zur Verstellung der Justiereinheit 1 weist das Fahrwerk 4 Rollen 10 auf, über deren Antrieb die Justiereinheit 1 sowohl verfahren als auch verdreht werden kann. Ein Not-Aus 11 erlaubt im Störfall eine sofortige Unterbrechung des Justiervorgangs.

### Bezugszeichenliste

- 1: Justiereinheit
- 2: Grundträger
- 3: Ausrichtelement
- 4: Fahrwerk
- 5: Akkumodul
- 6: Sensormodule
- 7: Bedieneinheit
- 8: Display
- 9: Signalleuchte
- 10: Rollen
- 11: Not-Aus
- 12: Kraftfahrzeug

## Patentansprüche

1. Justiereinheit zur Ausrichtung von Fahrzeugsensoren und/oder -kameras an einem Kraftfahrzeug, mit
- einem Grundträger (2) zur verstellbaren Aufnahme eines Ausrichtelements (3),
- einer mit dem Grundträger (2) verbundenen Verfahreinheit (4),
- einer mit der Verfahreinheit (4) verbundenen Positionserfassungseinheit zur Positionsbestimmung des Ausrichtelements (3) gegenüber den Fahrzeugsensoren und/oder -kameras und
- einer zentralen Steuereinheit zur selbsttätigen Steuerung und Ausrichtung der Verfahreinheit (4) und des Ausrichtelements (3) gegenüber dem Kraftfahrzeug (12).

2. Justiereinheit nach Anspruch 1, **dadurch gekennzeichnet, dass** das Ausrichtelement (3) mit einem an dem Grundträger (2) angeordneten und mit der Steuereinheit verbundenen Stellantrieb verbunden ist.

3. Justiereinheit nach Anspruch 1 oder 2, **dadurch gekennzeichnet, dass** die Steuereinheit mit einer Kommunikationseinheit zum drahtlosen Datenaustausch verbunden ist.

4. Justiereinheit nach einem oder mehreren der vorhergehenden Ansprüche, **dadurch gekennzeichnet, dass** die Steuereinheit mit einer Scaneinheit zur Vermessung und/oder Identifizierung eines Kraftfahrzeugs (12) verbunden ist.

5. Justiereinheit nach einem oder mehreren der vorhergehenden Ansprüche, **dadurch gekennzeichnet, dass** die Steuereinheit mit einer Hinderniserfassungseinheit verbunden ist.

6. Justiereinheit nach einem oder mehreren der vorhergehenden Ansprüche, **dadurch gekennzeichnet, dass** die Positionserfassungseinheit eine Vorrichtung zur Wegmessung aufweist.

7. Justiereinheit nach einem oder mehreren der vorhergehenden Ansprüche, **gekennzeichnet durch** eine Signaleinheit (9) zum Umgebungsschutz.
